# EUROPÄISCHE PATENTANMELDUNG

(11) **EP 1 785 704 A1**
(43) Veröffentlichungstag der Anmeldung: **16.05.2007**
(21) Anmeldenummer: 05110765.4
(22) Anmeldetag: 15.11.2005
(51) Int. Cl.: G01G 23/00, G01G 21/23

(54) **Wägemodul**

(71) Anmelder: Mettler-Toledo AG, 8606 Greifensee (CH)
(72) Erfinder: Bäumel, Helmut, 8606, Greifensee (CH)

(57) **Zusammenfassung**

Wägemodul mit einer darin anordnenbaren Wägezelle (3), einer Basis (1), einer zur Basis (1) beabstandeten Abdeckung (2, 102), einer Abhebesicherung und einem Führungselement (5, 105, 205) mit mindestens einer Aussparung (10) für die Abhebesicherung, wobei die im Wägemodul anordnenbare Wägezelle (3), die Abhebesicherung und das Führungselement (5, 105, 205) zwischen der Basis (1) und der Abdeckung (2, 102) angeordnet sind, dadurch gekennzeichnet, dass das Führungselement (5, 105, 205) und/oder die Abhebesicherung mindestens ein Kontrollmittel aufweist, welches zur visuellen Kontrolle der räumlichen Ausrichtung des Wägemoduls dient.

## Beschreibung

Die Erfindung betrifft ein Wägemodul mit einer darin anordnenbaren Wägezelle.

Derartige Wägemodule können in Abhängigkeit der verwendeten Wägezelle und deren Messbereich in unterschiedlichen Gebieten eingesetzt werden. Wägemodule mit Hochlastwägezellen werden vor allem zur Wägung der Inhalte von grossvolumigen Behältern, Tanks, Reaktionsgefässen oder Reaktionsgebinden verwendet. Im Allgemeinen wird das gesamte Gewicht eines Behälters mittels mehrerer Wägemodule bestimmt, welche fest zwischen dem zu wägenden Behälter und dem Boden oder einer tragenden Struktur oder Konstruktion, z. B. einem Stahlgerüst, befestigt sind. Vorzugsweise wird an jedem Fuss oder jeder Stütze des Behälters ein Wägemodul befestigt. Ein typisches Wägemodul umfasst ein Gehäuse, in dem eine Wägezelle, häufig eine Rocker-Pin-Wägezelle, anordnenbar ist. Eine auf das Wägemodul einwirkende Kraft wird über das Gehäuse auf die Wägezelle übertragen. Je nach Ausgestaltung des Moduls können diese auch unter extremen Aussenbedingungen eingesetzt werden, wie beispielsweise im Freien, in einer technischen Anlage oder in einer Produktionsanlage.

Um eine zu starke Auslenkung oder Verschiebung der Wägezelle im Wägemodul zu vermeiden, weisen die Wägemodule häufig eine Abhebesicherung und teilweise zusätzlich noch mindestens einen Querlenker auf. Die Abhebesicherung und der Querlenker begrenzen die vertikale und horizontale Auslenkung des Wägemoduls und schützen die Wägezelle bei starken Seitenkräften, wie sie beispielsweise durch Windlasten oder auch durch ein Verkippen des Wägemoduls hervorgerufen werden.

Wägemodule mit einer darin anordnenbaren Wägezelle, insbesondere einer Hochlastwägezelle, sind u. a. aus der US 6,331,682 B1 bekannt. In dieser Schrift wird ein Wägemodul offenbart, welches eine zwischen einer Bodenplatte und einer Kopfplatte angeordnete Wägezelle umfasst. Zwischen den Platten weist das Wägemodul Abstandshalter auf, welche durch spielfrei gelagerte Verbindungsmittel miteinander verbunden sind. Diese Abstandstandhalter schützen die Wägezelle sowohl gegen zu starkes Abheben, als auch gegen zu starke Seitenkräfte und gegen Verkippen.

Kommerziell erhältlich ist beispielsweise das Wägemodul "Centerlign" von Mettler Toledo, welches eine selbstzentrierende Aufhängung für eine hermetisch verschlossene Hochlastwägezelle aufweist.

Die bekannten Wägemodule sind häufig komplex aufgebaut, erfordern aufwendige Wartungen und sind nur mit viel Erfahrung und/oder rein nach Gefühl einstellbar, da jedes Wägemodul sowohl einzeln als auch in Relation zu den anderen an einem Behälter befestigen Wägemodulen eingestellt werden muss.

Damit ergibt sich als Aufgabe die Entwicklung eines Wägemoduls, welches die Nachteile des Stands der Technik überwindet, einfach aufzustellen und einfach einzustellen ist.

Gelöst wird diese Aufgabe durch ein Wägemodul nach Anspruch 1, eine Transport- und Montageeinrichtung nach Anspruch 10, sowie eine Wägemodulanordnung nach Anspruch 12.

Ein erfindungsgemässes Wägemodul weist eine darin anordnenbare Wägezelle, eine Basis, eine zur Basis beabstandete Abdeckung, eine Abhebesicherung und ein Führungselement mit mindestens einer Aussparung für die Abhebesicherung auf. Die im Wägemodul anordnenbare Wägezelle, die Abhebesicherung und das Führungselement sind vorzugsweise zwischen der Basis und der Abdeckung angeordnet. Das Führungselement und/oder die Abhebesicherung weist mindestens ein Kontrollmittel auf, welches eine visuelle Kontrolle der räumlichen Ausrichtung des Wägemoduls ermöglicht.

Die Basis und die Abdeckung sind vorzugsweise plattenförmig ausgestaltet, so dass das Wägemodul einfach zwischen einem zu wägenden Behälter und dem Boden oder einer tragenden Konstruktion angeordnet werden kann. Üblicherweise werden solche Wägemodule an den Füssen oder Stützen des zu wägenden Behälters befestigt, so dass es sich anbietet die Ausgestaltung der Basis und die der Abdeckung an den Behälter und/oder an die diesen tragende Konstruktion anzupassen. Vorzugsweise werden die Basis mit dem Boden oder der tragenden Konstruktion und die Abdeckung mit dem Behälter verbunden, wobei das erfindungsgemässe Wägemodul auch mit entgegengesetzter Ausrichtung eingebaut werden kann.

Zwischen der Basis und der Abdeckung ist im Wägemodul eine Wägezelle oder eine starre Dummy-Wägezelle anordnenbar. Dadurch kann das Wägemodul beispielsweise mit einer starren Dummy-Wägezelle transportiert und/oder montiert werden, welche erst nach erfolgreicher Montage gegen eine empfindliche und vorzugsweise selbstzentrierende Wägezelle, insbesondere eine Hochlastwägezelle, ausgetauscht wird. Dieses Vorgehen ist vorteilhaft, da so eine unabsichtliche Beschädigung oder sogar eine Zerstörung der Wägezelle während des Transports und/oder der Montage des Wägemoduls vermieden werden kann.

Zwischen der Basis und der Abdeckung sind auch die Abhebesicherung und das Führungselement, welches mindestens eine Aussparung für die Abhebesicherung aufweist, angeordnet. Vorzugsweise sind die Abhebesicherung an der Basis und das Führungselement an der Abdeckung befestigt.

Zur einfachen Kontrolle der räumlichen Ausrichtung eines erfindungsgemässen Wägemoduls weist das Führungselement und/oder die Abhebesicherung mindestens ein Kontrollmittel auf.

Mittels des mindestens einen Kontrollmittels kann die vertikale und/oder horizontale Ausrichtung des Wägemoduls selbst im eingebauten Zustand rasch und einfach erfasst werden und bei einer werksseitigen Grundeinstellung, einer Montage und/oder bei einer Wartung schnell und einfach korrigiert werden, so dass fehlerhafte Wägeergebnisse sowie Beschädigungen der im Wägemodul anordnenbaren Wägezelle weitestgehend vermieden werden können.

Vorzugsweise ist ein zur Abhebesicherung bzw. zur Basis hin gerichtetes Ende des Führungselements als erstes Kontrollmittel ausgestaltet. Das erste Kontrollmittel dient vor allem dazu die horizontale Ausrichtung des Wägemoduls anzuzeigen.

In einem bevorzugten Ausführungsbeispiel ist das erste Kontrollmittel als abgeschrägte Kante, insbesondere als Fase, ausgestaltet. Dadurch wird das erste Kontrollmittel optisch vom restlichen Führungselement abgesetzt, wodurch die Erkennung und die Kontrolle der horizontalen Ausrichtung des Wägemoduls durch die ausgebildete Fasenkante zusätzlich erleichtert werden. Das Wägemodul weist eine korrekte horizontale Ausrichtung auf, wenn die Abhebsicherung berührungsfrei im Führungselement geführt wird. Über den horizontalen Abstand zwischen dem ersten Kontrollmittel und der Aussenseite der Abhebesicherung kann die horizontale Ausrichtung des Wägemoduls, also die Ausrichtung parallel zur Basis, ermittelt und kontrolliert werden.

Ein zweites Kontrollmittel ist vorzugsweise in Form einer oder mehrerer geeigneter Markierungen gestaltet, welche an der Aussenseite der Abhebesicherung angeordnet sind. Zusammenwirkend kann mittels des ersten und zweiten Kontrollmittels die vertikale Ausrichtung des Wägemoduls, also die Ausrichtung senkrecht zur Basis, und auch der Abstand zwischen Basis und Abdeckung ermittelt und kontrolliert werden. Das erste Kontrollmittel kann somit als eine Art Zeiger und das zweite Kontrollmittel als eine Art Anzeige wirken.

Das Führungselement weist eine Aussparung für die Abhebesicherung auf, wobei die Abhebesicherung zumindest teilweise in dieser Aussparung angeordnet ist. Ferner ist die Abhebesicherung berührungsfrei im Führungselement gelagert. Die berührungsfreie Lagerung ist für eine fehlerfreie Wägung wichtig, da sonst zusätzliche Kräfte, wie sie durch Reibung zwischen den Elementen oder ein Verkanten entstehen, auf eine im Wägemodul anordnenbare Wägezelle einwirken und eine Messung verfälschen können.

In einem bevorzugten Ausführungsbeispiel ist die Abhebesicherung mehrstückig ausgestaltet. Sie weist einen Sicherungsstift und einen Sockel auf. Das eine Ende des Sicherungsstifts ist lösbar mit dem Sockel verbunden, welcher wiederum mit der Basis des Wägemoduls verbunden ist. Das andere, freie Ende des Sicherungsstifts weist einen im Vergleich zu dessen lösbar verbundenem Ende grösseren Durchmesser auf und ist im Wesentlichen berührungsfrei in der im Führungselement ausgestalteten Aussparung angeordnet. Der Sockel kann entweder als Teil der Basis ausgestaltet oder fest mit der Basis verbunden sein.

Neben einer mehrstückigen Ausgestaltung kann die Abhebesicherung auch einstückig ausgestaltet sein. Der Sicherungsstift und der Sockel werden in diesem Fall aus einem einstückigen Materialblock gestaltet. Wird eine einstückige Abhebesicherung eingesetzt, so ist es vorteilhaft, wenn das Führungselement mehrteilig ausgebildet ist, damit dass Wägemodul einfach zusammengesetzt werden kann.

Die Güte des Wägeergebnisses beruht auf einer korrekten Ausrichtung der Wägemodule und vor allem der darin anordnenbaren Wägezelle. Eine Wägezelle kann durch eine zu starke horizontale oder vertikale Auslenkung der Abdeckung in Relation zur Basis beschädigt oder sogar zerstört werden.

Die horizontale Auslenkung kann durch eine Begrenzung des Spiels zwischen dem Führungselement und der Abhebesicherung begrenzt werden. Dazu weist das Wägemodul mindestens zwei einstellbare Anschläge auf, welche voneinander beabstandet im Führungselement angeordnet sind und zur Einstellung des Abstands bzw. des Spiels zwischen der Abhebesicherung und dem Führungselement dienen. Die Anschläge sind in der Wand des Führungselements angeordnet. Sie ragen einerseits in die im Führungselement ausgestaltete Aussparung hinein und stehen andererseits an der Aussenseite aus dem Führungselement heraus. Vorzugsweise handelt es sich bei den Anschlägen um Stifte, Schrauben oder Stangen mit einem Gewinde, so dass der Anteil der Anschläge, welcher in die Aussparung hineinragt verändert werden kann. Das aussen aus dem Führungselement herausragende Ende des einstellbaren Anschlags erlaubt eine einfache Einstellung der Eindringtiefe in die Aussparung im Führungselement. Die Anschläge können sowohl manuell wie auch mit geeigneten Werkzeugen oder Hilfsmitteln eingestellt werden.

Die vertikale Ausrichtung wird vor allem durch den Einbau der Wägemodule bestimmt, also beispielsweise durch die Planarität von den Behälterteilen und/oder den Teilen der tragenden Konstruktion an denen die Wägemodule befestigt werden aber auch durch die Beladung des Behälters. Daher bietet es sich an, die Basis und/oder die Abdeckung an diese Teile anzupassen.

In einem bevorzugten Ausführungsbeispiel sind die Abhebesicherung und das Führungselement im Wesentlichen zylindrisch ausgestaltet, so dass mittels des Anschlags ein gleichmässiger Abstand zwischen den beiden Elementen einstellbar ist und ferner die räumliche Ausrichtung des Wägemoduls auf einfache Weise ermittelt werden kann.

Zur Stabilisierung gegen seitliche Kräfte, beispielsweise Windlasten, eine ungleichmässige Befüllung des zu wägenden Behälters oder auch zur Aufnahme von durch ein im Behälter angeordnetes Rührwerk verursachten Drehmomenten, kann das Wägemodul zusätzlich mindestens einen Querlenker aufweisen, welcher eine im Wesentlichen starre Verbindung zwischen der Basis und der Abdeckung herstellen, wodurch die Basis gegenüber der Abdeckung geführt und das Wägemodul zusätzlich stabilisieren wird.

Während des Transports und/oder während der Montage ist im Wägemodul vorzugsweise eine starre Dummy-Wägezelle anstelle einer funktionsfähigen Wägezelle angeordnet.

Es ist vorteilhaft, wenn die räumliche Ausrichtung des Wägemoduls bereits werkseitig eingestellt und fixiert werden kann, so dass das Wägemodul sicher und einfach transportiert und montiert werden kann. Eine Transport- und Montageeinrichtung für das Wägemodul kann zwischen der Abhebesicherung und dem Führungselement angeordnet werden und dadurch eine starre Verbindung zwischen der Basis und der Abdeckplatte bilden. Vorzugsweise weist das Führungselement an seinem gegen die Basis gerichteten Ende einen Absatz auf, dessen Aussendurchmesser ungefähr mit dem Durchmesser der Abhebesicherung an der Basis übereinstimmt, so dass die Transport- und Montageeinrichtung einerseits in Kontakt mit der Abhebesicherung und andererseits in Kontakt mit dem Führungselement bzw. dem Absatz steht. Mittels der Transport- und Montageeinrichtung kann eine voreingestellte Grundausrichtung des Wägemoduls auch während der Montage erhalten werden, so dass eine endgültige Feineinstellung des Wägemoduls einfach und schnell durchgeführt werden kann.

Die Transport- und Montageeinrichtung kann ein- oder mehrteilig sowie zur lösbaren Arretierung des Wägemoduls in einer Grundposition ausgestaltet sein. Vorzugsweise ist die Transport- und Montageeinrichtung eine Schelle, ein ein- oder mehrteiliger Streifen oder ein ein- oder mehrteiliges Band aus einem starren Material, wie Metall oder auch Kunststoff. Die einzelnen Teile der Transport- und Montageeinrichtung können fest und/oder lösbar miteinander verbunden sein. Bei einer festen Verbindung muss die Transport- und Montageeinrichtung nach der Montage des Wägemoduls zerstört werden. Eine lösbar verbundene Transport- und Montageeinrichtung kann mehrfach verwendet werden und zum Beispiel für eine erneute Einstellung des Wägemoduls als Zentrier- und/oder Einstellhilfe verwendet werden.

In einer vorteilhaften Ausgestaltung wird eine Wägemodulanordnung, welche mindestens drei Wägemodule mit darin anordnenbaren Wägezellen aufweist, zur Bestimmung der Masse oder einer von der Masse ableitbaren physikalischen Grösse eines Behälters und/oder dessen Inhalts eingesetzt, wobei der Behälter mit den mindestens drei Wägemodulen fest verbunden ist.

Verschiedene Ausführungsbeispiele werden im Folgenden anhand der Figuren genauer beschrieben. Es zeigen:
- Fig. 1: Eine Seitenansicht eines Wägezellenmoduls mit mehrteiligerr Abhebesicherung im Schnitt;
- Fig. 2: eine Seitenansicht eines horizontal belasteten Wägemoduls mit einteiliger Abhebesicherung im Schnitt;
- Fig. 3: eine Seitenansicht eines Wägemoduls, welches einen zu grossen Abstand zwischen Basis und Abdeckung aufweist;
- Fig. 4: eine Seitenansicht eines Wägemoduls mit eingebautem Querlenker;
- Fig. 5: eine Aufsicht auf das in Fig. 4 gezeigte Wägemodul im Schnitt entlang der Schnittebene A-A;
- Fig. 6: eine Seitenansicht eines Wägemoduls mit Transport- und Montagevorrichtung im Schnitt;
- Fig. 7: eine schematische Darstellung von drei, eine Wägemodulanordnung bildenden Wägemodulen zur Wägung eines Behälters.

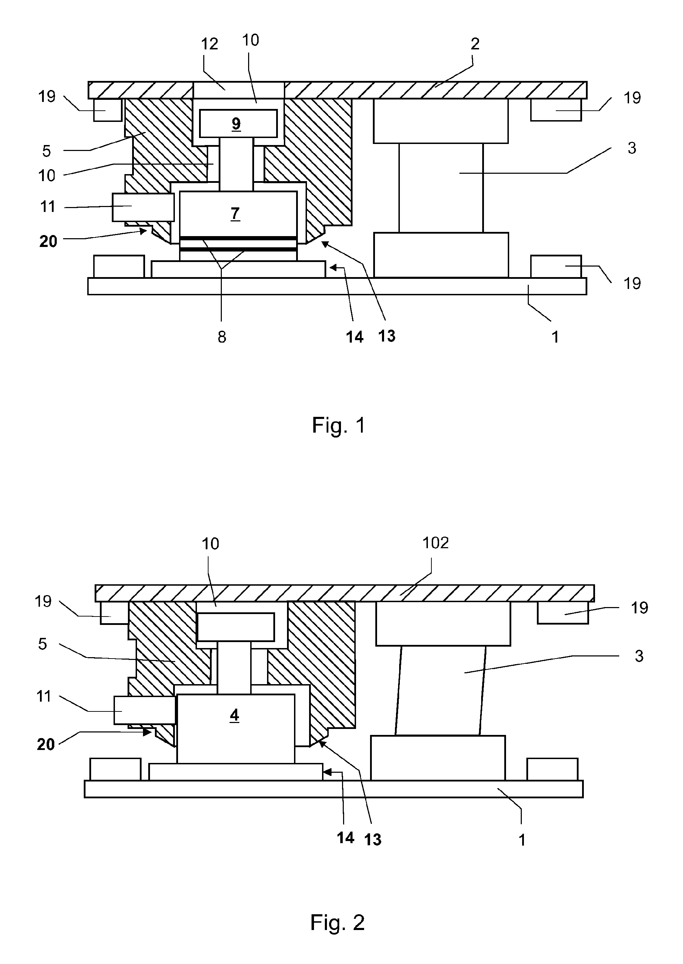

Figur 1 zeigt eine Seitenansicht eines erfindungsgemässen Wägemoduls im Schnitt. Das Wägemodul weist eine Basis 1 und eine dazu beabstandet angeordnete Abdeckung 2 auf. Zwischen der Basis 1 und der Abdeckung 2 sind eine Wägezelle oder ein Wägezellen-Dummy 3, eine mehrteilig ausgestaltete Abhebesicherung und ein Führungselement 5 angeordnet. Bei einer optimalen Ausrichtung und Einstellung des Wägemoduls stehen die Basis 1 und die Abdeckung 2 nur über die Wägezelle 3 miteinander in Kontakt, wobei die Wägezelle 3 mit der Basis 1 und der Abdeckung 2 lösbar verbunden ist. Die Dimensionen des Wägemoduls werden an die der gewünschten Wägezelle 3 angepasst, wobei Wägezellen 3 mit unterschiedlichen Messbereichen verwendet werden können, also Hochlastwägezellen ebenso wie Präzisionswägezellen.

Die Abhebesicherung wird bei guter Einstellung des Wägemoduls kontaktfrei im Führungselement 5 geführt. Für eine Wägung wird das Wägemodul so eingebaut, dass es zwischen einem zu wägenden Behälter und dem Boden bzw. einer den Behälter tragenden Konstruktion, z. B. einem Stahlgerüst oder einer Betonplatte, angeordnet ist. Vorzugsweise steht der zu wägende Behälter, z. B. ein Reaktionsbehälter oder ein Tank, in Kontakt mit der Abdeckung 2 und die Basis 1 in Kontakt mit der tragenden Konstruktion, wobei es auch möglich ist, das Wägemodul mit entgegen gesetzter Orientierung einzubauen, so dass der zu wägende Behälter in Kontakt mit der Basis 1 steht und die Abdeckung 2 mit dem Boden oder der tragenden Konstruktion verbunden ist. Die Basis 1 und die Abdeckung 2 sind vorzugsweise plattenartig ausgebildet, wobei sie jedoch auch an die Form des zu wägenden Behälters und/oder der tragenden Konstruktion angepasst werden können. Für die Montage des Wägemoduls am Behälter und/oder an der tragenden Konstruktion weisen die Basis 1 und die Abdeckung 2 mehrere geeignete Befestigungsmittel 19 auf.

Die Abhebesicherung ist vorzugsweise mehrteilig ausgestaltet und weist einen Sockel 7 und einen Sicherungsstift 9 auf. Der Sockel 7 ist an der Basis 1 angeordnet und ragt in den zwischen der Basis 1 und der Abdeckung 2 ausgebildeten Raum hinein. Der Sockel 7 ist derart ausgestaltet, dass er an seinem zur Basis 1 gerichten Ende einen grösseren Durchmesser aufweist als an seinem zur Abdeckung gerichteten Ende. Als Übergang zwischen den beiden unterschiedlichen Durchmessern ist ein vertikaler Absatz 14 ausgebildet, dessen Durchmesser idealerweise dem Durchmesser des zur Basis 1 gerichteten Endes des Führungselements 5 entspricht. Der Sockel 7 kann dabei ein Teil der Basis 1 sein oder auch fest oder lösbar mit dieser verbunden sein. Vorzugsweise ist der Sockel 7 einstückig ausgestaltet, er kann aber auch aus mehreren Teilen bestehen.

Am von der Basis 1 abgewandten Ende des Sockels 7 ist ein Sicherungsstift 9 angeordnet. Der Sicherungsstift 9 ist vorzugsweise lösbar mit dem Sockel 7 verbunden. Zur lösbaren Verbindung kann z. B. eine Schraub- oder eine Steckverbindung dienen. Der Sicherungsstift 9 ist derart ausgestaltet, dass sein der Abdeckung 2 zugewandtes freies Ende einen grösseren Durchmesser aufweist, als das der Basis 1 zugewandte mit dem Sockel 7 lösbar verbundene Ende. Seine Form entspricht in etwa der eines Nagels oder eines Stifts mit einem vergrösserten Kopf. Der Sicherungsstift 9 ist berührungsfrei in einer Aussparung 10 im Führungselement 5 angeordnet und dient dazu das Auseinanderfallen des Wägemoduls zu verhindern, welches durch ein versehentliches Entfernen der Abdeckung 2 von der Basis 1 oder umgekehrt verursacht wird.

An der Aussenseite der Abhebesicherung, insbesondere am Sockel 7, ist ein zweites Kontrollmittel 8 angeordnet, welches hier in Form von mindestens zwei beabstandeten und parallel zueinander angeordneten Markierungen ausgestaltet ist. Vorzugsweise ist die gesamte Abhebesicherung im Wesentlichen zylindrisch ausgestaltet und das zweite Kontrollmittel 8 verläuft ringförmig um den Umfang der Abhebesicherung bzw. des Sockels 7 herum. In seiner einfachsten Ausgestaltung besteht das zweite Kontrollmittel 8 aus mindestens einer Markierung, wie beispielsweise einer Rille, einer Erhebung oder einem farbig markierten Streifen. In Figur 1 weist das zweite Kontrollmittel 8 zwei Markierungen auf. Weitere Ausgestaltungen des zweiten Kontrollmittels 8 können skalierte Markierungen umfassen, mit denen nicht nur der relative Abstand zwischen Basis 1 und Abdeckung 2 sondern auch ein absoluter, beispielsweise in Millimeter angegebener Abstandswert, ermittelt werden kann.

Das Führungselement 5 ist mit der Abdeckung 2 verbunden und kann auch einen Teil derselben darstellen. Das Führungselement 5 weist eine zentrale Aussparung 10 auf, in der die Abhebesicherung, insbesondere der Sicherungsstift 9, zumindest teilweise angeordnet ist. Die Aussparung 10 ist so gestaltet, dass das Führungselement 5 einen gleichmässigen Abstand zur Abhebesicherung und zur Abdeckung 2 hin aufweist, wenn das Wägemodul optimal ausgerichtet ist. Das Führungselement 5 stellt sozusagen eine Art Hülse zur Aufnahme der Abhebesicherung dar, wobei die Form der Aussparung 10 im Wesentlichen der Form der Abhebesicherung entspricht.

Bei einer mehrteilig ausgestalteten Abhebesicherung 7, 9 ist es vorteilhaft, wenn die Aussparung 10 im Führungselement 5 mit einem Durchbruch 12 in der Abdeckung 2 zusammen wirkt, so dass der Sicherungsstift 9 der Abhebesicherung einfach vom Sockel 7 getrennt und durch den Durchbruch 12 entfernt werden kann. Diese Ausgestaltung erleichtert auch die Montage und/oder Demontage des gesamten Wägemoduls.

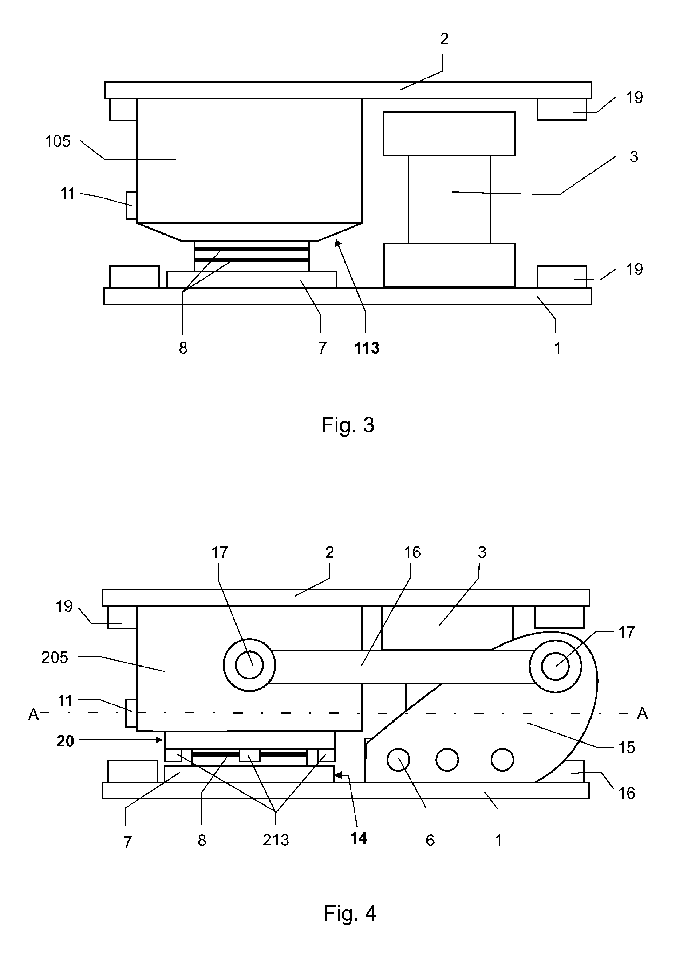

Das der Basis 1 zugewandte Ende des Führungselements 5 ist als erstes Kontrollmittel 13 ausgestaltet. Von der Abdeckung 2 aus betrachtet, verjüngt sich der Durchmesser des Führungselements 5 und bildet einen Absatz 20 aus, dieser geht dann in eine Fase über, welche eine Kante bildet. Die Fase ist eine Aussenfase, wobei das zur Basis 1 gerichtete Ende des Führungselements 5 zwischen der im Führungselement 5 ausgestalteten Aussparung 10 und der Fase einen spitzen Winkel aufweist, welcher den Durchmesser der Aussparung 10 definiert und diesen optisch hervorhebt. Die Position des ersten Kontrollmittels 13 in Relation zum zweiten Kontrollmittel 8 ist ein Mass für den vertikalen Abstand zwischen der Basis 1 und der Abdeckung 2. Für ein optimales Wägeergebnis muss dieser Abstand mit der Höhe der zwischen der Basis 1 und der Abdeckung 2 angeordneten Wägezelle oder der Dummy-Wägezellen 3 korrespondieren. Ist der Abstand zu gering, so ist die Abhebesicherung, insbesondere der Sockel 7, in Kontakt mit dem Führungselement 5, wodurch das Wägeergebnis verfälscht wird. Ist der Abstand zu gross, so kann es passieren, dass die Wägezelle 3 keinen Kontakt mit der Abdeckung 2 oder der Basis 1 hat, was in einem zu niedrigen oder auch gar keinem Wägeergebnis resultieren kann (s. a. Figur 3).

In Figur 1 ist ein aus zwei Markierungen bestehendes zweites Kontrollmittel 8 dargestellt. Das Wägemodul ist optimal eingestellt, wenn sich das erste Kontrollmittel 13, wie in Figur 1 gezeigt, zwischen den beiden Markierungen des zweiten Kontrollmittels 8 befindet und die Abhebesicherung berührungsfrei im Führungselement 5 angeordnet ist. Bei einem derart ausgerichteten Wägemodul steht die Basis 1 nur über die Wägezelle 3 mit der Abdeckung 2 in Kontakt, so dass keine Störkräfte, wie sie durch einwirkende Seitenkräfte, Reibung und/oder durch Verkanten entstehen, eine Messung beeinflussen können.

Neben dem Abstand zwischen Basis 1 und Abdeckung 2 ist auch die bezogen auf die Zeichnung horizontale Lage dieser beiden Elemente zueinander für ein korrektes Wägeergebnis wichtig. Zur Einstellung des Spiels zwischen dem Führungselement 5 und der Abhebesicherung sind im Führungselement 5 mindestens zwei und vorzugsweise drei einstellbare Anschläge 11 angeordnet, von denen in dieser Ansicht einer zu sehen ist. Die Anschläge 11 sind beispielsweise als Schrauben, Gewindestangen oder arretierbare Stangen ausgestaltet und werden so durch die Wand des Führungselements 5 geführt, dass sie zumindest teilweise in den zwischen dem Führungselement 5 und der Abhebesicherung ausgebildeten Raum, also die Aussparung 10, hineinragen und bezogen auf die Zeichnung eine horizontale Verschiebung der Basis 1 in Relation zur Abdeckung 2 begrenzen. Die Anschläge 11 sind einstellbar im Führungselement 5 angeordnet, so dass in Abhängigkeit der Toleranz der eingesetzten Wägezelle 3, das Spiel zwischen dem Führungselement 5 und der Abhebesicherung eingestellt werden kann, bzw. es den Einsatzbedingungen angepasst werden kann. Zur optischen Kontrolle des einstellbaren Spiels ragen die Anschläge 11 aussen aus dem Führungselement 5 heraus, so dass auch über die Länge des aus dem Führungselement 5 herausragenden Teils der Anschläge 11 auf die Grösse des Spiels zwischen dem Führungselement 5 und der Abhebesicherung zurück geschlossen werden kann. Zur einfachen optischen Kontrolle bietet es sich an, die einstellbaren Anschläge 11 mit einer Markierung, wie zum Beispiel verschieden farbigen Streifen, zu versehen, wobei auch andere, komplexere Skalen, z. B. eine Millimeterskala, verwendet werden können.

Die folgenden Figuren 2 bis 6 zeigen verschiedene Ausgestaltungen des in Figur 1 dargestellten Wägemoduls. Gleiche Elemente sind mit gleichen Bezugszeichen versehen. Für eine detaillierte Erläuterung der einzelnen Funktionen und Elemente wird auf die Beschreibung der Figur 1 verwiesen.

In Figur 2 ist eine Seitenansicht eines Wägemoduls mit einer einstückigen Abhebesicherung 4 und einer durchgehenden Abdeckung 102 im Schnitt dargestellt. Das Wägemodul weist nur ein erstes Kontrollmittel 13 zur Kontrolle und Überprüfung der horizontalen Ausrichtung des Wägemoduls auf. Auf das Wägemodul wirkt eine in Bezug auf die Zeichnung nach rechts wirkende Kraft ein. Aufgrund dieser Krafteinwirkung verschieben sich die Basis 1 und die Abdeckung 2 in Relation zu einander und damit auch das Führungselement 5 in Relation zur Abhebesicherung 4. Die einstellbaren Anschläge 11 (nur einer ist zu sehen) sind hier auf maximales Spiel eingestellt, so dass die einwirkende Kraft das Führungselement 5 gegen die Abhebesicherung 4 presst. Gleichzeitig wird die Wägezelle 3, welche hier als Rocker-Pin-Wägezelle ausgestaltet ist, aus ihrer zentrierten Ruhelage ausgelenkt, wodurch fehlerhafte Messergebnisse erzeugt werden können.

Die seitliche Auslenkung des Wägemoduls ist, aufgrund des als Fase ausgestalteten ersten Kontrollmittels 13 besonders leicht zu erkennen, da die Fase den Durchmesser der Aussparung 10 begrenzt und optisch hervorhebt. In Abhängigkeit von der Stärke der einwirkenden Kraft ändern sich die Abstände zwischen der Abhebesicherung 4 und dem Führungselement 5, bis das Führungselement 5 zumindest an einer Stelle in Kontakt mit der Abhebesicherung 4 oder mit mindestens einem in die Aussparung 10 des Führungselements 5 hineinragenden einstellbaren Anschlag 11 tritt, von denen in dieser Ansicht nur einer zu sehen ist.

Figur 3 zeigt eine Seitenansicht eines Wägemoduls, dessen erstes Kontrollmittel 113 als Fase ausgestaltet ist, welche hier eine abgeschrägte Kante ist, welche das komplette zur Basis 1 gerichtete Ende des Führungselements 5 umfasst. Das gezeigte Wägemodul ist nicht optimal eingestellt, da sich das erste Kontrollmittel 113 bezogen auf die Zeichnung oberhalb der beiden das zweite Kontrollmittel 8 bildenden Markierungen befindet. Der Abstand zwischen der Basis 1 und der Abdeckung 2 ist somit zu gross und die die Wägezelle 3 hat keinen Kontakt mit der Abdeckung 2. Eine solche Situation kann eintreten, wenn der zu wägende Behälter ungleichmässig beladen oder verkippt ist. Der zu grosse Abstand wird durch die Position des ersten Kontrollmittels 113 in Relation zum zweiten Kontrollmittel 8 aufgezeigt.

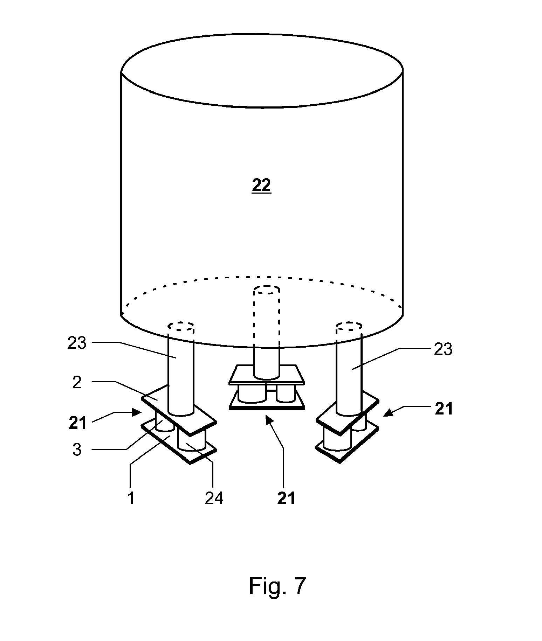

Zur Bestimmung des Gewichts eines Behälters, wie beispielsweise eines Tanks oder eines Reaktors werden mindestens drei Wägemodule, welche eine Wägemodulanordnung bilden zwischen dem Behälter und einer tragenden Konstruktion befestigt (s. a. Figur 7). Diese Module müssen sowohl einzeln als auch in Relation zueinander eingestellt sein, um ein optimales Wägeergebnis zu erhalten.

In Abhängigkeit der äusseren Bedingungen unter denen die erfindungsgemässen Wägemodule eingesetzt werden, kann es sinnvoll sein, diese zusätzlich mit einem in der Figur 4 dargestellten Querlenker zu versehen, welcher die Basis 1 mit der Abdeckung 2 starr verbindet und so das Wägemodul zusätzlich gegen seitlich- oder querwirkende Kräfte sichert.

Der in Figur 4 gezeigte Querlenker besteht aus zwei Teilen und wird an einer Seite des Wägemoduls angebracht. Eine Halterung 15 wird an einem Befestigungselement 6, welches mit der Basis 1 verbunden ist, befestigt. Zwischen dieser Halterung 15 und dem Führungselement 205 wird mit geeigneten Befestigungsmitteln 17 ein Arm 16 beweglich gelagert. Seitlich auf das Wägemodul einwirkende Kräfte werden vom Querlenker 15, 16 aufgenommen und abgeleitet, wodurch die Wägezelle 3 geschützt wird. Das zur Basis 1 gerichtete Ende des Führungselements 205 ist ebenfalls als erstes Kontrollmittel 213 ausgestaltet. Das Führungselement 5 verjüngt sich zur Basis 1 hin unter Ausbildung eines rechtwinkeligen Absatzes 20. Den Abschluss zur Basis 1 hin bilden vorzugsweise mehrere Begrenzungen, welche ein erstes Kontrollmittel 213 ausbilden. Diese Begrenzungen sind in regelmässigen Abständen um den Umfang des Führungsmoduls 205 herum angeordnet und definieren den Durchmesser der im Führungselement 205 ausgestalteten Aussparung (s. Figuren 1, 2 und 6). Diese Begrenzungen haben vorzugsweise die Form von kleinen Plättchen oder Blöcken. Anhand des Abstands zwischen den das erste Kontrollmittel 213 bildenden Begrenzungen und der Abhebesicherung, vor der hier nur ein Teil des Sockels 7 zu sehen ist, kann die horizontale Ausrichtung des Wägemodul sichtbar und bei entsprechender Ausgestaltung auch messbar machen, beispielsweise in Kombination mit einer an der bezogen auf die Zeichnung unteren Kante des Führungselements 105 angeordneten Skala oder durch Verwendung eines geeigneten Messinstruments, wie einer Schublehre oder eines einfachen Messstreifens mit fixer Breite.

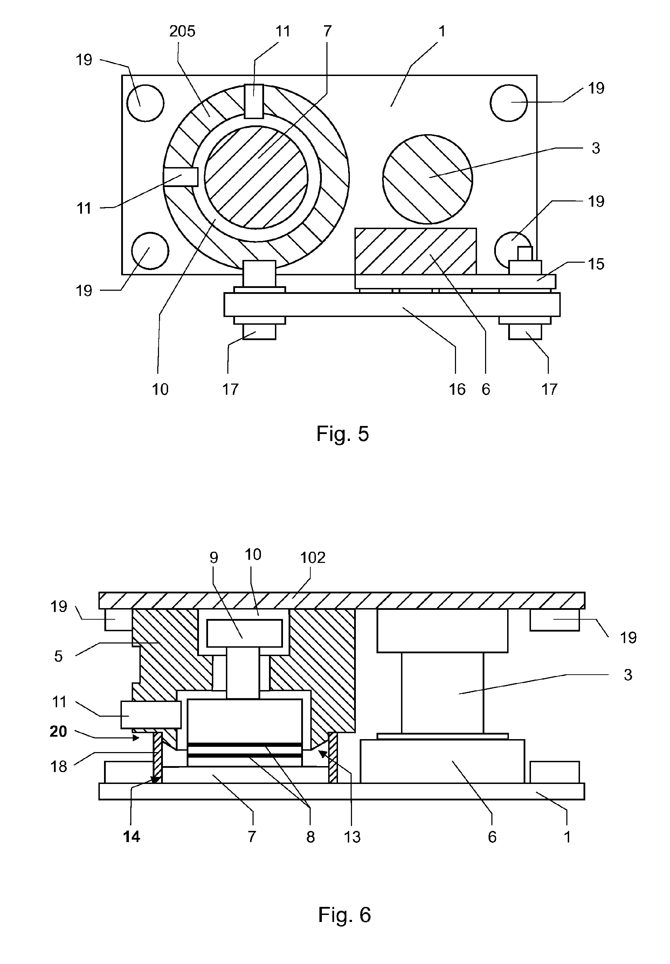

Figur 5 zeigt eine Aufsicht auf das in Figur 4 gezeigte Wägemodul im Schnitt entlang der in Figur 4 gezeigten Schnittebene A-A. Das Wägemodul weist einen aus einer Halterung 15 und einem Arm 16 bestehenden Querlenker auf. Der Querlenker ist an dem Befestigungselement 6 sowie am Führungselement 205 befestigt. Wie hier gut zu erkennen ist, sind sowohl das hülsenartige Führungselement 205, als auch die Abhebesicherung, von der hier nur ein Teil des Sockels 7 zu sehen ist, im Wesentlichen zylindrisch ausgestaltet. Die Abhebesicherung ist berührungsfrei in der Aussparung 10 des Führungselements 205 angeordnet. In die Aussparung 10 ragen auch die im Führungselement 205 angeordneten einstellbaren Anschläge 11, wobei dieses Wägemodul zwei Anschläge 11 aufweist. Die zwei Anschläge 11 und das Befestigungsmittel 17 des Querlenkers sind so im Führungselement angeordnet, dass die Anschläge 11 von aussen leicht eingestellt werden können. Das Wägemodul kann auch nur einen oder auch mehr als zwei einstellbare Anschläge 11 aufweisen, je nachdem wie stark das Spiel zwischen Führungselement 205 und Abhebesicherung kontrolliert werden soll. Die Anschläge 11 sind meist in derselben Ebene im Führungselement 205 angeordnet, wobei es auch möglich ist, dass die Anschläge 11 in unterschiedlichen Ebenen angeordnet sind.

Wägezellen 3 sind hochpräzise Messelemente und müssen daher, vor allem beim Einbau, vor zu grosser Krafteinwirkung geschützt werden. Erfindungsgemässe Wägemodule werden häufig zusammen mit Hochlastwägezellen für die Wägung von grossen Behältern und Gebinden und deren Inhalten, wie z. B. Tanks oder Reaktoren eingesetzt. Beim Einbau wird zunächst die Basis 1 eines Wägemoduls mittels geeigneter Befestigungsmittel 19 mit dem Behälter verbunden, z. B. durch Verschrauben oder Schweissen, und dann die Abdeckung 2 mittels weiterer Befestigungsmittel 19 an der den Behältern tragenden Konstruktion befestigt. Häufig werden drei oder mehr Wägemodule jeweils an den Füssen, Stützen oder auch direkt am Boden eines Behälters befestigt (s. Figur 7). Damit die Wägezelle während eines Transports oder der Montage nicht unabsichtlich zerstört wird, kann auch eine starre Dummy-Wägezellen anstelle der Wägezelle 3 im Wägemodul angeordnet werden.

Als weitere Montage- und Einstellhilfe kann das erfindungsgemässe Wägemodul zusätzlich noch eine lösbare Transport- und Montageeinrichtung 18 aufweisen, welche zusammen mit einem Wägemodul in Figur 6 dargestellt ist. Die Transport- und Montageeinrichtung 18 stellt eine starre Verbindung zwischen der Basis 1 und der hier einstückigen Abdeckung 102 her. Sie ist im Wesentlichen ringförmig und kann ein- oder mehrteilig ausgestaltet sein. Mögliche Ausgestaltungen umfassen einfache Kabelbinder, genauso wie mehrfach verwendbare Schellen, z. B. Rohrschellen, welche entweder aus einem flexiblen Material bestehen, oder an mindestens einer Stelle direkt und/oder mit einem geeigneten Hilfsmittel verbindbar sind. Als Material für die Transport- und Montageeinrichtung 18 eignet sich Metall genauso wie verschiedene Kunststoffe.

Die Transport- und Montageeinrichtung 18 wird für den Transport und die Montage des Wägemoduls zwischen der Basis 1 und dem Führungselement 5 angeordnet und verhindert so eine bezogen auf die Zeichnung seitliche Verschiebung der Basis 1 in Relation zur Abdeckung 2. Die Transport- und Montageeinrichtung 18 umspannt den Umfang eins zur Basis gerichteten Teils des Führungselements 5, welches dafür mit einem vertikalen Absatz 20 versehen ist, welcher in die das erste Kontrollmittel 13 bildende Kante übergeht. Der Durchmesser des den Absatzes 20 aufweisenden Teils des Führungselements 5 entspricht in etwa dem Aussendurchmesser eines Absatzes 14 am Sockel 7 der Abhebesicherung. Somit kann die Transport- und Montageeinrichtung durch ein Verspannen um die beiden Absätze 14, 20 einfach befestigt werden.

Zusätzlich ermöglicht die Transport- und Montageeinrichtung 18 die Einstellung einer Grundposition. In der Grundposition werden alle einstellbaren Anschläge 11 so eingestellt, dass sie gleichweit in den Abstand zwischen Führungselement 5 und Abhebesicherung hineinragen und ein an die einsetzbare Wägezelle 3 angepasstes Spiel erlauben. Über die Höhe der Transport- und Montageeinrichtung 18 kann auch der optimale Abstand zwischen Basis 1 und Abdeckung 2 bestimmt werden, da die Transport- und Montageeinrichtung 18 zwischen dem Führungselement 5 und der Basis 1 angeordnet ist. Bei Verwendung der Transport- und Montageeinrichtung 18 kann während der Montage ein minimaler Abstand zwischen Basis 1 und Abdeckung 2 nicht unterschritten werden, so dass das Wägemodul sogar mit bereits eingesetzter Wägezelle montiert werden kann.

Ein erfindungsgemässes Wägemodul kann unterschiedlich ausgestaltet sein, wobei es auch möglich ist, die in den Figuren 1 bis 6 gezeigten Merkmale, insbesondere die verschiedenen Ausgestaltungsmöglichkeiten des ersten Kontrollmittels und/oder des zweiten Kontrollmittels, beliebig zu kombinieren. Prinzipiell ist es auch möglich ein Wägemodul mit nur einem Kontrollmittel auszustatten, wobei die Ausgestaltung mit einem ersten und einem zweiten Kontrollmittel bevorzugt wird.

Der Begriff Kontrollmittel schliesst nicht nur visuelle Kontrollmittel ein, sondern auch jede Art von elektronischen Kontrollmitteln deren Signal an eine Anzeige weitergeleitet werden kann, wobei die Anzeige sowohl direkt am Wägemodul als auch davon entfernt, beispielsweise in einem Leitstand, angeordnet sein kann. Elektronische Kontrollmittel können beispielsweise eine Tastatur, ein Fühler, ein Endschalter oder eine analoge oder digitale Anzeige sein.

Figur 7 zeigt eine schematische, nicht massstabsgetreue Darstellung einer zwischen einen Behälter 22 und dem Boden angebrachte Wägemodulanordnung, welche drei Wägemodule 21 aufweist. Jedes Wägemodul 21 ist mit einem Stützfuss 23 des Behälters 22 fest verbunden. Vorzugsweise ist die Abdeckung 2 über den Stützfuss 23 fest mit dem Behälter 22 verbunden. Die Basis 1 ist vorzugsweise mit dem Boden oder einer tragenden Konstruktion verbunden, welche hier nicht dargestellt ist. Zwischen der Basis 1 und der Abdeckung 2 weist jedes Wägemodul eine Wägezelle 3 sowie eine Abhebesicherung und ein Führungselement auf, welche hier unter dem Bezugszeichen 24 zusammengefasst sind. Die Wägemodule 21 sind ebenso wie die Stützfüsse 23 gleichmässig unter dem Behälter 22 verteilt. Der Behälter 22 kann jede beliebige Form haben, wobei Tank oder Reaktionsgefässe meist eine runde oder eckige Form aufweisen. Die Wägemodule 21 können entweder mit den Stützfüssen 23 eines Behälters 22 verbunden werden oder auch direkt mit dem Boden eines Behälters, wenn dieser keine Stützfüsse aufweist.

Anhand von Figur 7 wird deutlich wieso die Wägemodule 21 sowohl in sich als auch in Relation zu einander ausgerichtet werden müssen. Die Wägemodule 21 haben eine tragende Funktion und stellen den Kontakt zwischen dem Behälter 22 und der den Behälter 22 tragenden Konstruktion dar. Eine Fehleinstellung der Wägemodule 21 hat somit auch Einfluss auf die Standfestigkeit des Behälters 22, welche gerade bei z. B. aggressiven und/oder umweltschädlichen Inhalten ständig gewährleistet sein muss.

Eine derartige Wägemodulanordnung weist mindestens drei Wägemodule 21 auf und dient vor allem dazu, das Gewicht des Behälterinhalts zu erfassen.

### Bezugszeichenliste

- 1: Basis
- 2, 102: Abdeckung
- 3: Wägezelle, Dummy-Wägezelle
- 4: Abhebesicherung
- 5, 105, 205: Führungselement
- 6: Befestigungselement
- 7: Sockel
- 8: zweites Kontrollmittel
- 9: Sicherungsstift
- 10: Aussparung
- 11: einstellbarer Anschlag
- 12: Durchbruch
- 13, 113, 213: erstes Kontrollmittel
- 14: Absatz am Sockel 7
- 15: Halterung
- 16: Arm
- 17: Befestigungsmittel
- 18: Transport- und Montageeinrichtung
- 19: Befestigungsmittel
- 20: Absatz
- 21: Wägemodul
- 22: Behälter
- 23: Stützfuss
- 24: Abhebesicherung und Führungselement

## Patentansprüche

1. Wägemodul mit einer darin anordnenbaren Wägezelle (3), einer Basis (1), einer zur Basis (1) beabstandeten Abdeckung (2, 102), einer Abhebesicherung und einem Führungselement (5, 105, 205) mit mindestens einer Aussparung (10) für die Abhebesicherung, wobei die im Wägemodul anordnenbare Wägezelle (3), die Abhebesicherung und das Führungselement (5, 105, 205) zwischen der Basis (1) und der Abdeckung (2, 102) angeordnet sind, **dadurch gekennzeichnet, dass** das Führungselement (5, 105, 205) und/oder die Abhebesicherung mindestens ein Kontrollmittel aufweist, welches zur visuellen Kontrolle der räumlichen Ausrichtung des Wägemoduls dient.

2. Wägemodul nach Anspruch 1, **dadurch gekennzeichnet, dass** ein gegen die Basis (1) gerichtetes Ende des Führungselements (5, 105, 205) als erstes Kontrollmittel (13, 113, 213) ausgestaltet ist.

3. Wägemodul nach Anspruch 2, **dadurch gekennzeichnet, dass** das erste Kontrollmittel (13, 113) als Fase ausgestaltet ist.

4. Wägemodul nach einem der Ansprüche 1 bis 3, **dadurch gekennzeichnet, dass** die Abhebesicherung ein zweites Kontrollmittel (8) aufweist.

5. Wägemodul nach einem der Ansprüche 1 bis 4, **dadurch gekennzeichnet, dass** die Abhebesicherung zumindest teilweise im Führungselement (5, 105, 205) angeordnet ist, und dass die Abhebesicherung im Wesentlichen berührungsfrei im Führungselement (5, 105, 205) gelagert ist.

6. Wägemodul nach einem der Ansprüche 1 bis 5, **dadurch gekennzeichnet, dass** die Abhebesicherung mehrstückig ausgestaltet ist und einen Sicherungsstift (9) aufweist, dessen eines Ende lösbar mit einem Sockel (7) verbunden ist und dessen freies Ende einen im Vergleich zum lösbar verbundenen Ende grösseren Durchmesser aufweist.

7. Wägemodul nach einem der Ansprüche 1 bis 5, **dadurch gekennzeichnet, dass** die Abhebesicherung (4) einstückig ausgestaltet ist.

8. Wägemodul nach einem der Ansprüche 1 bis 7, **dadurch gekennzeichnet, dass** mindestens zwei einstellbare Anschläge (11) voneinander beabstandet im Führungselement (5, 105, 205) angeordnet sind, welche zur Einstellung und/oder Limitierung des Spiels zwischen der Abhebesicherung und dem Führungselement (5, 105, 205) dienen.

9. Wägemodul nach einem der Ansprüche 1 bis 8, **dadurch gekennzeichnet, dass** die Abhebesicherung und das Führungselement (5, 105, 205) im Wesentlichen zylindrisch ausgestaltet sind.

10. Wägemodul nach einem der Ansprüche 1 bis 9, **dadurch gekennzeichnet, dass** dieses mindestens einen Querlenker aufweist, welcher die Basis (1) gegenüber der Abdeckung (102) führt und so das Wägemodul zusätzlich stabilisiert.

11. Transport- und Montageeinrichtung für ein Wägemodul nach einem der Ansprüche 1 bis 10, welche zwischen der Basis (1) und dem Führungselement (5) angeordnet ist und so die Basis (1) mit der Abdeckplatte (102) starr verbindet.

12. Transport- und Montageeinrichtung nach Anspruch 11, **dadurch gekennzeichnet, dass** die Transport- und Montageeinrichtung (18) ein- oder mehrteilig sowie zur lösbaren Arretierung des Wägemoduls in einer Grundposition ausgestaltet ist.

13. Wägemodulanordnung mit mindestens drei Wägemodulen (21) nach einem der Ansprüche 1 bis 10 mit darin anordnenbaren Wägezellen (3) zur Bestimmung des Masse oder einer von der Masse ableitbaren physikalischen Grösse eines Behälters (22) und/oder dessen Inhalts, wobei der Behälter (22) mit der Wägemodulanordnung fest verbunden ist.
